# EUROPEAN PATENT SPECIFICATION

(11) **EP 2 911 155 B1**
(45) Date of publication and mention of the grant of the patent: **07.03.2018**
(21) Application number: 13848786.3
(22) Date of filing: 14.10.2013
(51) Int. Cl.: G21C 3/33, G21C 3/334

(54) **NUCLEAR REACTOR FUEL ASSEMBLY**
KERNBRENNSTABBÜNDEL
ASSEMBLAGE DE COMBUSTIBLE POUR RÉACTEUR NUCLÉAIRE

(30) Priority: 22.10.2012 RU 2012144862
(43) Date of publication of application: 26.08.2015
(73) Proprietor: Open Joint-Stock Company "Tvel", Moscow 115409 (RU); Open Joint-Stock Company "Novosibirsk Chemical Concentrates Plant, Novosibirsk 630110 (RU); Open Joint-Stock Company "Afrikantov Experimental Design Bureau for Mechanical Engineering", Nizhny Novgorod 603074 (RU)
(72) Inventor: SAMOILOV, Oleg Borisovich, Nizhny Novgorod 603006 (RU); ROMANOV, Aleksandr Ivanovich, Nizhny Novgorod 603035 (RU); SIMANOVSKAYA, Irina Evgenjevna, Nizhny Novgorod 603086 (RU); ERSHOV, Valentin Fedorovich, Nizhny Novgorod 603074 (RU); ENIN, Anatoliy Alekseevich, Novosibirsk 630110 (RU); SHUSTOV, Mstislav Aleksandrovich, Novosibirsk 630017 (RU); TKACHEV, Andrey Aleksandrovich, Novosibirsk 630027 (RU); DOLGOV, Aleksey Borisovich, Podolsk 142110 (RU)
(74) Representative: Michalski Hüttermann & Partner Patentanwälte mbB
(86) International application number: PCT/RU2013/000904
(87) International publication number: WO 2014/065711

(56) References cited:
- RU-C1- 2 075 118
- US-A- 4 376 092
- US-A- 4 684 500
- US-A- 5 015 435
- US-A- 5 015 435
- US-A1- 2011 255 651

## Description

The invention relates to the field of nuclear engineering, in particular to a fuel assembly structure, and may be used in pressurized water reactors.

A connecting structure for a fuel assembly is known (see RU2412492 of 11.12.2008, G21C3/33). This connecting structure for a fuel assembly comprises: a retaining sleeve comprising a protruding section formed on the top-end section of the sleeve; a top nozzle with a mounting opening formed therein, the end portion of the retaining sleeve being inserted into said opening, and a locking key that is installed inside the mounting opening of the retaining sleeve and has an opening area made on the key lower surface, said opening area having a shape corresponding to the protruding section.

This structure eliminates the necessity of disassembling the components during connecting and disconnecting the top shank, which prevents foreign matter from entering inside and mixing with fuel.

A drawback of this device is the presence of threading connections complicating quick connection/disconnection of a complex element of a fuel assembly.

As to the technical essence and purpose, the closest to the claimed technical solution is a fuel assembly and a device for mounting/dismounting its top nozzle according to RU2075118 of 30.06.1992, G21C3/32, G21C19/00 that is taken as the prototype.

This fuel assembly comprises a bundle of fuel rods installed vertically in a frame assembled from spacer grids, and two nozzles, the top one and the bottom one. One of the fuel assembly nozzles (top nozzle) comprises a support plate and a bearing plate with openings clasping guide bushes with elements ensuring splitting of the nozzle with guide channels, and a locking device coupled to the bearing plate by means of a fastening means.

The known structure enables to improve reliability of connecting the top nozzle to the guide channels and ensure mounting and dismounting of the nozzle assembled separately from the bundle and being a finished one-piece structure. A fuel assembly may be dismounted with the use of a device for removing the top nozzle at any stage of the fuel assembly life cycle. After installing the fuel assembly top nozzle onto the guide channels, it should be fastened.

Fastening is performed with the use of arresters that are screwed onto each guide sleeve or are fastened with welded bottom portion.

A drawback of this fuel assembly is the necessity of using a special device for mounting and dismounting the top nozzle, a great number of removable parts and a great number of welds necessary for fastening these removable parts (arresters), which all compromise manufacturability and increase manufacture work content. Moreover, welds are to be cut during dismounting, which may cause scale ingress into guide channels.

US 5015435 A describes a sleeve for locking the guide tube having an outer surface comprising successivley a cylindrical and a frustoconical part in the axial direction, without any radially protruding part.

US 4684500 A describes in a reconstitutable fuel assembly, a top nozzle attaching structure for mounting the top nozzle adapter plate in releasable locking engagement upon the guide thimble upper end portions includes several improved features.

The present invention addresses the technical problem of creating a fuel assembly which is easier to load and unload, reduces a time period required for the mounting and removal of the nozzles during manufacture of the fuel assembly, and for refueling a reactor.

The invention is defined by the features of the independent claim. Preferred embodiments are defined by the features of the dependent claims.

The technical effect is the creation of a device without removable components, which makes possible to secure the nozzles in the guide channels simultaneously and exclude welds, thus reducing a time period required for mounting and dismounting nozzles, increasing manufacturability, simplifying and accelerating the fuel assembly manufacturing process and reducing the overall downtime of a nuclear reactor during repair of a fuel assembly at the time of refueling.

This technical effect is achieved owing to that, in the nuclear reactor fuel assembly comprising: a bundle of fuel rods; guide channels; two nozzles, one of the nozzles having a bearing plate with openings; elements for the detachable connection of the nozzles to the guide channels; a locking device for the detachable connection and a fastening means for the locking device, the elements for the detachable connection of the nozzles to the guide channels have a cross-section size greater than the size of the openings in the bearing plate of the nozzle. Furthermore, the elements for the detachable connection of the nozzles to the guide channels are designed in such a way that their cross-section can be decreased to enable passage through the openings in the bearing plate of the nozzle and are secured in the guide channels. The locking device is provided with bushes which secure the elements for the detachable connection of the nozzles to the guide channels, said bushes being arranged in the openings in the bearing plate.

Furthermore, the locking device can be arranged in the two nozzles simultaneously. The fastening means for fastening the locking device to the bearing plate is formed as springloaded screws. The bushes of the locking device are formed as a single component.

The proposed structure enables to reduce a time period required for performing operations of manufacturing and repairing a fuel assembly due to the possibility of securing one or both nozzles in the guide channels simultaneously and excluding removable components, improve manufacturability by reducing the number of fastening elements and simplifying their structure.

The essence of the proposed technical solution is illustrated by the drawings, wherein:

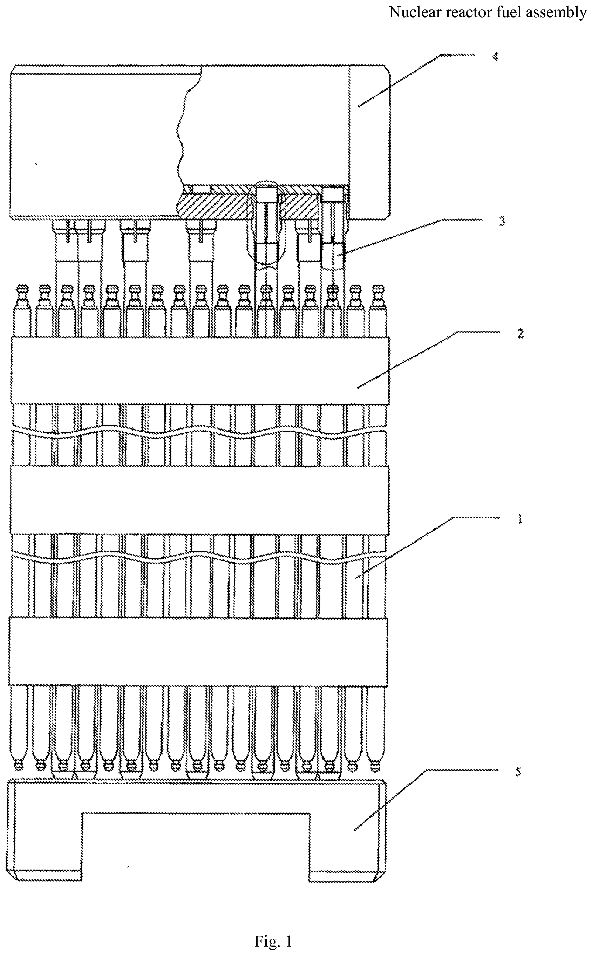

Fig. 1 shows a general view of the nuclear reactor fuel assembly with removable nozzles;

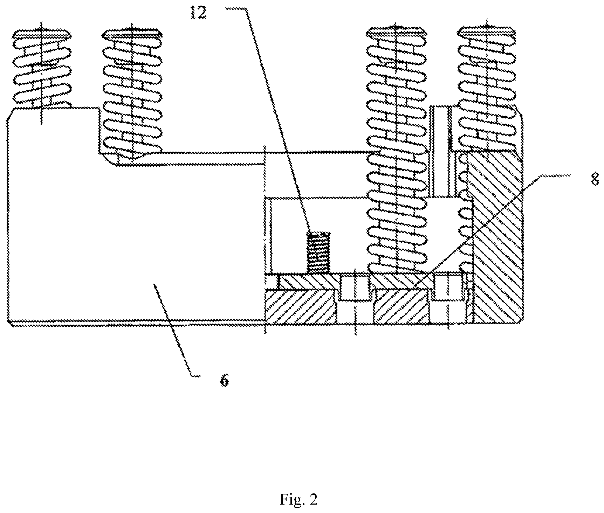

Fig. 2 shows a general view of a removable nozzle;

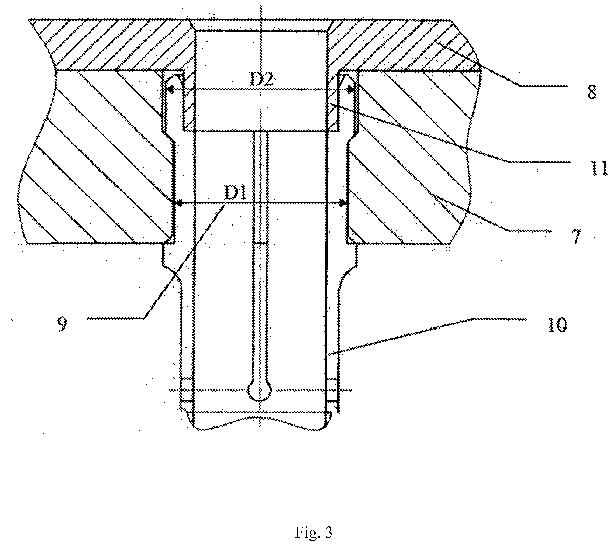

Fig. 3 shows the locking device fastening assembly on the guide channels and the guide channel in the bearing plate.

The nuclear reactor fuel assembly consists of a bundle of fuel rods 1 clasped by spacer grids 2, guide channels 3, a top nozzle 4 and a bottom nozzle 5. The nozzle 4, 5 comprises a housing 6, a bearing plate 7, and a locking device 8. The bearing plate 7 is provided with openings 9 having a D1 size. These openings accommodate elements 10 ensuring detachability of connection between the nozzles and the guide channels, a cross-sectional D2 size of the elements 10 being greater than the D1 size of the openings 9 in the bearing plate of the nozzle. The elements 10 are rigidly fixed on the guide channels 3, and the locking device 8 for the detachable connection is provided with bushes 11 retaining the elements 10 and preventing removal of the nozzle 4, 5.

The locking device 8 is fastened to the bearing plate 7 by means of a fastening means 12 in the form of spring loaded screws.

All the bushes 11 of the locking device 8 are made as a single component.

The elements 10 ensuring detachability of the connection between the nozzles and the guide channels may be made as collets having projections for resting on the bearing plate of the nozzle 4, 5. The collets are provided with cuts enabling each collet to deform for the purpose of converging of its projections in order the collet may pass into the opening in the nozzle bearing plate.

The nuclear reactor fuel assembly works as follows.

For conducting a repair it is necessary to remove the top nozzle 4 and/or the bottom nozzle 5 of the fuel assembly. In order to remove the nozzle, the locking device 8 is lifted and the elements 10 of the guide channels 3 are released. Then, the top nozzle 4 and/or the bottom nozzle 5 may be removed by means of standard equipment. After repair works on the fuel assembly are completed, the nozzle is installed onto the elements 10 of the guide channels 3. In order to fix the nozzle, the retaining bushes 11 of the locking device 8 are installed into the openings 9 in the bearing plate 7. After the nozzle 4 or 5 is arranged on the guide channels 3, the locking device 8 is fixed on the bearing plate 7 with the use of the fastening means. The fuel assembly is ready for operation.

Thus, the use of a fuel assembly having the proposed structure enables to reduce a time period required for repair works and decrease a number of removable (not fastened) parts used in the fuel assembly structure.

## Claims

1. A nuclear reactor fuel assembly, comprising:
a bundle of fuel rods (1);
guide channels (3);
two nozzles (4, 5), one of the nozzles (4, 5) having a bearing plate (7) with openings (9);
elements (10) for the detachable connection of the nozzles (4, 5) to the guide channels (3);
a locking device (8) for the detachable connection and a fastening means (12) for the locking device (8), whereby
the elements (10) for the detachable connection of the nozzles (4, 5) to the guide channels (3) have a cross-section size greater than the size of the openings (9) in the bearing plate (7), said elements (10) are designed in such a way that their cross-section can be decreased to enable passage through the opening (9) in the bearing plate (7) of the nozzle (4, 5), and said elements (10) are secured in the guide channels (3); and
the locking device (8) is provided with bushes (11) which secure the elements (10) for the detachable connection of the nozzles (4, 5)to the guide channels (3) in the openings (9) in the bearing plate (7) of the nozzle (4, 5), and
**characterized in that**
all bushes (11) of the locking device (8) are made as a single component.

2. The nuclear reactor fuel assembly according to Claim 1, **characterized in that** the locking device (8) is arranged in the two nozzles (4, 5) simultaneously.

3. The nuclear reactor fuel assembly according to Claim 1, **characterized in that** the fastening means (12) for fastening the locking device (8) to the bearing plate (7) is formed as springloaded screws.

## Patentansprüche

1. Kernreaktorbrennelement, mit:
einem Bündel von Brennstäben (1);
Führungskanälen (3);
zwei Düsen (4, 5), wobei eine der Düsen (4, 5) eine Lagerplatte (7) mit Öffnungen (9) aufweist;
Elementen (10) zum lösbaren Verbinden der Düsen (4, 5) mit den Führungskanälen (3); und
einer Verriegelungseinrichtung (8) für die lösbare Verbindung und einer Befestigungseinrichtung (12) für die Verriegelungseinrichtung (8),
wobei die Elemente (10) für die lösbare Verbindung der Düsen (4, 5) mit den Führungskanälen (3) eine Querschnittsgröße haben, die größer ist als die Größe der Öffnungen (9) in der Lagerplatte (7), wobei die Elemente (10) derart ausgebildet sind, dass ihr Querschnitt vermindert werden kann, um einen Durchgang durch die Öffnung (9) in der Lagerplatte (7) der Düse (4, 5) zu ermöglichen, und wobei die Elemente (10) in den Führungskanälen (3) gesichert sind, und
wobei die Verriegelungseinrichtung (8) mit Buchsen (11) versehen ist, die die Elemente (10) für die lösbare Verbindung der Düsen (4, 5) mit den Führungskanälen (3) in den Öffnungen (9) der Lagerplatte (7) der Düse (4, 5) befestigen;
**dadurch gekennzeichnet, dass**
alle Buchsen (11) der Verriegelungseinrichtung (8) als ein einzelnes Bauteil hergestellt sind.

2. Kernreaktorbrennelement nach Anspruch 1, **dadurch gekennzeichnet, dass** die Verriegelungseinrichtung (8) in den beiden Düsen (4, 5) gleichzeitig angeordnet ist.

3. Kernreaktorbrennelement nach Anspruch 1, **dadurch gekennzeichnet, dass** die Befestigungseinrichtung (12) zum Befestigen der Verriegelungseinrichtung (8) an der Lagerplatte (7) als federbelastete Schrauben ausgebildet ist.

## Revendications

1. Assemblage de combustible pour réacteur nucléaire, comprenant :
un faisceau de tiges de combustible (1) ;
des canaux de guidage (3) ;
deux buses (4, 5), l'une des buses (4, 5) ayant une plaque d'appui (7) avec des ouvertures (9) ;
des éléments (10) destinés à la connexion détachable des buses (4, 5) sur les canaux de guidage (3) ;
un dispositif de verrouillage (8) destiné à la connexion détachable et un moyen de fixation (12) destiné au dispositif de verrouillage (8), ce par quoi
les éléments (10) destinés à la connexion détachable des buses (4, 5) des canaux de guidages (3) ont une taille de section transversale supérieure à la taille des ouvertures (9) dans la plaque d'appui (7), lesdits éléments (10) sont conçus d'une telle manière que leur section transversale peut être diminuée afin de permettre un passage à travers l'ouverture (9) dans la plaque d'appui (7) de la buse (4, 5) et lesdits éléments (10) sont fixés dans les canaux de guidage (3) ; et
le dispositif de verrouillage (8) est muni de joncs (11) qui fixent les éléments (10) pour la connexion détachable des buses (4, 5) aux canaux de guidage (3) dans les ouvertures (9) dans la plaque d'appui (7) de la buse (4, 5), et
**caractérisé en ce que**
tous les joncs (11) du dispositif de verrouillage (8) sont fabriqués d'un seul tenant.

2. Assemblage de combustible pour réacteur nucléaire selon la revendication 1, **caractérisé en ce que** le dispositif de verrouillage (8) est agencé dans les deux buses (4, 5) simultanément.

3. Assemblage de combustible pour réacteur nucléaire selon la revendication 1, **caractérisé en ce que** le moyen de fixation (12) destiné à fixer le dispositif de verrouillage (8) à la plaque d'appui (7) est conçu sous la forme de vis à ressorts.
